# EUROPEAN PATENT APPLICATION

(11) **EP 3 985 416 A1**
(43) Date of publication of application: **20.04.2022**
(21) Application number: 20201954.3
(22) Date of filing: 15.10.2020
(51) Int. Cl.: G01T 1/161, G01T 1/20

(54) **COMBINED IMAGING DETECTOR AND IMAGING SYSTEM**

(71) Applicant: Koninklijke Philips N.V., 5656 AG Eindhoven (NL)
(72) Inventor: WIECZOREK, Herfried Karl, 5656 AE Eindhoven (NL); STEGEHUIS, Herman, 5656 AE Eindhoven (NL); ALVING, Peter Lex, 5656 AE Eindhoven (NL); JACOBS, Johannes Wilhelmus Maria, 5656 AE Eindhoven (NL)
(74) Representative: Philips Intellectual Property & Standards

(57) **Abstract**

The present invention relates to a combined imaging detector (10, 20) for detection of gamma and x-ray quanta comprising an integrating x-ray detector (11) comprising a first scintillator layer (12) and a photodetector array (13) and a second structured scintillator layer (14), optionally as part of a second gamma detector having a second photodetector array. The combined imaging detector can be used for X-ray and SPECT detection and uses the principle of current flat x-ray detectors. Different resolutions are used: high spatial resolution for x-ray imaging and low spatial resolution for SPECT imaging.

## Description

### FIELD OF THE INVENTION

The present invention relates to a combined imaging detector for detection of gamma and x-ray quanta and to a corresponding imaging system.

### BACKGROUND OF THE INVENTION

State-of-the art in oncological interventions is the use of x-ray imaging on a C-arm, sometimes combined with a small gamma probe. In Selective Internal Radiation Therapy (SIRT), the blood flow out of the liver into the lungs and the gastrointestinal tract has to be stopped by vessel coiling prior to therapy. These possible shunts are controlled by planar gamma imaging, requiring patient transport from the interventional lab into the SPECT room. Too high shunting may require additional coiling, i.e. repetitive changing of rooms. This workflow could be strongly improved by an x-ray / gamma camera combination on a C-arm in the interventional lab. For that aim various concepts have been proposed in the past based on a combination of x-ray detector and Anger camera.

One of these concepts is described in US 2019/090827 A1 that discloses a combined imaging detector for the detection of x-ray and gamma quanta. The combined imaging detector is adapted for simultaneous detection of gamma and x-ray quanta. The combined imaging detector includes an x-ray anti-scatter grid, a layer of x-ray scintillator elements, a first photodetector array, a layer of gamma scintillator elements, and a second photodetector array that are arranged in a stacked configuration along a radiation-receiving direction. The x-ray anti-scatter grid comprises a plurality of septa that define a plurality of apertures which are configured to collimate both x-ray quanta and gamma quanta received from the radiation receiving direction such that received gamma quanta are collimated only by the x-ray anti-scatter grid. The use of the x-ray anti-scatter grid as a collimator for received gamma quanta results in a significantly lighter combined imaging detector, but in a possibly insufficient collimation.

The main issue with such a combined detector concept is the high weight of the Anger camera with its lead shield, typically 100-150 kg, with the weight for a collimator to be added, at least 30 kg for an active SPECT detector area of 40 x 54 cm (low energy general purpose, LEGP). Assuming a special small size, 30 x 40 cm, which is similar to the x-ray detector, respective weights would be at least 80 kg for the camera and 17 kg for a small collimator. This weight cannot be handled by current C-arm systems. Other geometries like an Anger camera on a second C-arm or on a robot arm from the ground or the ceiling limit patient access and require extra effort for system control and image registration.

### SUMMARY OF THE INVENTION

It is an object of the present invention to provide an improved combined imaging detector and a corresponding imaging system having reduced weight and costs while at the same time allowing sufficient patient access and avoiding the need to reposition the patient between x-ray and SPECT imaging.

In a first aspect of the present invention a combined imaging detector is presented comprising
- an integrating x-ray detector comprising a first scintillator layer of x-ray scintillator elements configured to generate x-ray scintillation light signals in response to detected x-ray quanta and to generate first gamma scintillation light signals in response to detected gamma quanta; and
- a second structured scintillator layer of gamma scintillator elements configured to generate second gamma scintillation light signals in response to detected gamma quanta;
   wherein the integrating x-ray detector further comprises a photodetector array arranged between the first scintillator layer and the second scintillator layer and configured to convert said x-ray scintillation light signals into x-ray signals and said first and second gamma scintillation light signals into first and second gamma signals, and
   wherein the first scintillator layer, the photodetector layer and the second scintillator layer are arranged in a stacked configuration along a radiation-receiving direction.

In a second aspect of the present invention another combined imaging detector is presented comprising
an integrating x-ray detector comprising
- a first scintillator layer of x-ray scintillator elements configured to generate x-ray scintillation light signals in response to detected x-ray quanta, and
- a first photodetector array configured to convert said x-ray scintillation light signals into x-ray signals; and
- an integrating gamma detector comprising
- a second structured scintillator layer of gamma scintillator elements configured to generate gamma scintillation light signals in response to detected gamma quanta, and
- a second photodetector array configured to convert said gamma scintillation light signals into gamma signals,
wherein the first scintillator layer, the first photodetector array, the second scintillator layer, and the second photodetector array are arranged in a stacked configuration along a radiation-receiving direction.

In a further aspect of the present invention an imaging system is presented comprising an x-ray source for emitting pulsed x-ray radiation and a combined imaging detector for detection of gamma and x-ray quanta as disclosed herein.

Preferred embodiments of the invention are defined in the dependent claims. It shall be understood that the claimed system has similar and/or identical preferred embodiments as the claimed imaging detector, in particular as defined in the dependent claims and as disclosed herein.

The present invention is based on the idea to make use of an integrating x-ray detector not only for x-ray detection but in a similar way for gamma detection. In particular, a flat dynamic x-ray detector, which comprises a photodetector array, e.g. an amorphous silicon (a-Si:H) based photodetector based panel with a thin layer of columnar CsI:Tl crystals on the front side, not only for high-resolution x-ray imaging but also for low-resolution gamma imaging. A second structured scintillator layer, e.g. a pixelated scintillator array, is either optically coupled to the back side of the x-ray detector or is combined with a second photodetector array (e.g. a-Si:H based detector on glass plate) or detectors on foil. The second scintillator layer is added for better absorption of gamma radiation and has a substantially different spatial resolution than the first scintillator layer, i.e. it is optimized for absorption of gamma radiation that has a substantially higher energy than x-ray radiation.

With such a combined imaging detector, cone beam CT (CBCT) can be measured in the usual way by a fast rotation with >180° angle of the C-arm, preferably without a collimator. SPECT is measured with a slow rotation (e.g. in the time range of 5-30 minutes) and preferably with a collimator in front of the detector, possibly with a limited number of x-ray projections for retrospective correlation of SPECT and CBCT.

In an implementation, the additional weight of a 30 x 40 x 1 cm CsI layer is 5.4 kg, a 3 mm layer Pb shield on top would be 4.1 kg, and a 30 x 40 cm collimator is about 17 kg, altogether less than 30 kg. This weight can be handled by a standard C-arm of an interventional system.

In an embodiment of the combined imaging detector of the first aspect electrical contacts and/or a substrate layer arranged between the photodetector array and the second scintillator layer are transparent for gamma scintillation light signals. This ensures that the photodetector array can safely detect gamma radiation based on gamma scintillation light signals emitted by the second scintillator layer. Thus, a full gamma signal is available at the output of the photo detector.

In another embodiment of the combined imaging detector of the first aspect the photodetector array is configured to generate the first gamma signals by adding up a plurality of first gamma signals detected at a plurality of neighboring detector pixels into combined first gamma signals. The gamma signal measured in a multitude of x-ray detector pixels of the photodetector array is thus is added up and binned into larger pixels, e.g. for SPECT reconstruction.

In still another embodiment of the combined imaging detector of the first aspect the second scintillator layer comprises an array of optically separated CsI:Tl crystals, structured CsI:Tl crystals, or a polycrystalline or ceramic layer. These materials have shown to provide the desired detection of gamma quanta in this imaging detector. It is preferred to use CsI:Tl material both in the first scintillator layer and in the second scintillator layer since the signals generated in the first and second scintillator layer are combined into one signal by design and the photon gain in both scintillator layers should be identical to guarantee a signal height that is proportional to the energy absorbed in both scintillator layers, independent of the energy of the incoming x-ray or gamma quanta.

In an embodiment of the combined imaging detector of the second aspect the first photodetector array is configured to absorb low-energy scattered gamma radiation. This ensures that in the second photodetector array gamma radiation with much lower scatter fraction is detected.

In another embodiment of the combined imaging detector of the second aspect wherein the second scintillator layer comprises an array of structured crystals of one of CsI:Tl, NaI:Tl, Gd2O2S:Tb, Y2O3:Eu, or (Lu,Gd)(Al,Ga):Ce or a polycrystalline or ceramic layer. These materials have the necessary high light output and, at the same time, are strongly absorbing x-ray and gamma radiation so that they will provide the desired detection of gamma quanta in this imaging detector. In this second aspect of the combined imaging detector it is not necessary to use the same compounds in the first and second scintillator layer since the signals generated in these two scintillator layers are not combined into one signal but are handled independent of each other so that a different photon gain in both scintillator layers can be adjusted.

Preferably, the first scintillator layer comprises a layer of columnar CsI:Tl crystals. Such columnar crystals provide the necessary high spatial resolution for x-ray imaging.

Further, the one or more photodetector arrays preferably each comprises an array of Si:H photodiodes or a direct converter, in particular amorphous selenium or perovskites. These materials have the advantage that they can be deposited in thin layers on a large detector area.

In another embodiment the combined imaging detector further comprises a removable collimator configured to be automatically moved into and out of the radiation path so that it is within the radiation path during the detection of gamma quanta and out of the radiation path during the detection of x-ray quanta. The movement may e.g. be achieved by folding, shifting or rotation, which is preferably done automatically, but may generally be done manually as well. This contributes to the aim of avoiding to reposition the patient for alternative x-ray and SPECT examination.

In an embodiment the first scintillator layer has a thickness in the range of 300 to 800 µm. In another embodiment the second scintillator layer has a thickness in the range of 2 to 40 mm, in particular in the range of 5 to 10 mm. Thus, the first scintillator layer is much thinner than the second scintillator layer, which ensures that the first photodetector array may be used for low-energy gamma radiation and x-ray detection.

In another embodiment the second scintillator layer is configured to generate additional x-ray scintillation light signals in response to detected x-ray quanta used to generate additional x-ray signals for increasing the total x-ray signals, increasing the S/N ratio, obtaining spectral information and/or increasing image contrast. This further improves the accuracy of finally reproduced x-ray images.

The disclosed x-ray imaging system may further comprise a control unit configured to control the combined imaging detector to detect gamma quanta during intervals between x-ray pulses during which x-ray quanta are detected, in particular to control the combined imaging detector to detect gamma quanta during intervals that are longer than x-ray pulses. The length of the respective intervals can thus be controlled as needed.

The disclosed x-ray imaging system may further comprise a scatter correction unit configured to correct the gamma signals for scattered gamma radiation using an attenuation map of an imaging object, in particular using an attenuation map obtained from said x-ray signals by scaling down x-ray attenuation to energies of gamma radiation. The scatter correction may be done during iterative reconstruction of SPECT images. Scatter correction may even be applied for single projections (i.e. not for SPECT images). This embodiment improves the accuracy of reconstructed images or projections.

In an implementation it is proposed that the combined imaging detector is an imaging detector having an integrating x-ray detector and an integrating gamma detector, wherein the first scintillator layer is configured to generate additional gamma scintillation light signals in response to detected gamma quanta, wherein the first photodetector array is configured to convert said additional scintillation light signals into additional gamma signals, and wherein the scatter correction unit is configured to use the ratio of the additional gamma signals to the gamma signals as additional input for the scatter correction. A higher ratio of gamma signal from the first photodetector array compared to the second photodetector shows that the scatter fraction of the signal is higher. Based on simple models this can be used for better scatter correction, especially for single gamma projections.

In another embodiment the disclosed imaging system may further comprise a reconstruction unit configured to reconstruct a gamma image only from gamma signals obtained from gamma quanta detected by the second scintillator layer or from gamma signals obtained from gamma quanta detected by the first and second scintillator layers.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of an embodiment of an imaging system 1 according to the present invention.
Fig. 2 shows a cross-sectional view of a first embodiment of a combined imaging detector according to the present invention.
Fig. 3 shows a cross-sectional view of a second embodiment of a combined imaging detector according to the present invention.
Fig. 4 shows a diagram illustrating the absorption of gamma quanta in an 800 µm CsI layer.

### DETAILED DESCRIPTION OF THE INVENTION

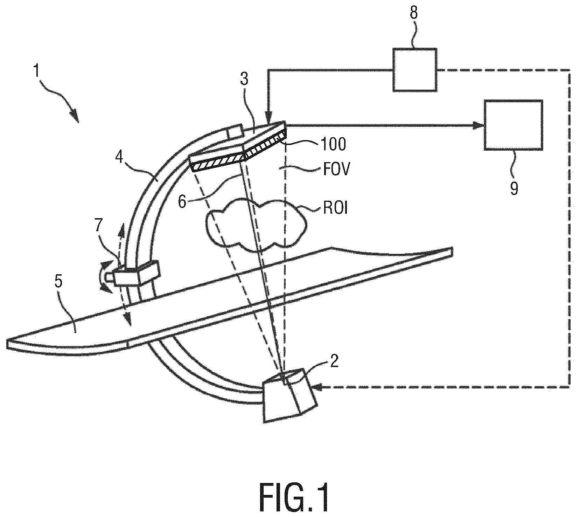

Fig. 1 shows a schematic diagram of an embodiment of an imaging system 1 according to the present invention. The imaging system 1 comprises an x-ray source 2, a combined imaging detector 3, a C-arm 4, and a patient table 5. The x-ray source 2 is attached to a first portion of C-arm 4 and the detector 3 is attached to a second portion of the C-arm 4. The x-ray source 2 and the detector 3 are positioned to measure x-ray transmission along path 6 between the x-ray source 2 and the detector 3. The field-of-view FOV of the x-ray source detector arrangement in Fig. 1 is illustrated by the short dashed lines that comprises path 6. The combined imaging detector 3 can be used for simultaneous (or subsequent or consecutive or alternate) detection of gamma and x-ray quanta to generate an x-ray image and a nuclear image for the same region of interest ROI.

The x-ray source 2 can be a standard x-ray source, although it is also contemplated to use a dual energy source in this position. Preferably, the x-ray source emits pulsed x-ray radiation so that gamma quanta in the intervals between x-ray pulses can be detected. The C-arm 4 may be a standard C-arm as commonly used in x-ray imaging and may be mounted in a fixed position or optionally arranged for various movements, e.g. as illustrated by the arrows near its support 7. Various modes of scanning are generally possible with such an imaging system.

Optionally, a control unit 8 is provided for controlling the detector 3 to detect gamma quanta during intervals between x-ray pulses. The control unit 8 may be used in combination with any of the embodiments illustrated in the figures. Specifically the control unit 8 may be operated in combination with a combined imaging detector as described below. The control unit 8 may further control the x-ray source 2, in particular the pulse rate and pulse duration. Moreover the control unit may be configured to control the gamma detector to generate gamma detection signals only during intervals between x-ray pulses. This may be achieved by for example monitoring the x-ray detection signals or x-ray source activation signals as described above and electronically disabling the generation of gamma detection signals during x-ray pulses, for example by either gating them or adjusting the power supplied to the gamma detector.

Further, a processing unit 9, e.g. a workstation or computer, may be provided to process the acquired data, i.e. the x-ray signals and the gamma signals, for instance in order to reconstruct x-ray images and nuclear images and/or to correct the gamma signals for scattered gamma radiation. The processing unit 9 may thus operate as reconstruction unit and/or as scatter correction unit.

In an embodiment a removable collimator 100 is provided in front of or as part of the detector 3, e.g. in a position between the first and second detector in the second aspect of the imaging system according to this invention.. The collimator 100 is configured to be automatically moved into and out of the radiation path, i.e. the FOV, so that it is within the radiation path during the detection of gamma quanta and out of the radiation path during the detection of x-ray quanta. The movement may e.g. be achieved by folding, shifting or rotation, which is preferably done automatically (e.g. via a rail system or a folding / shifting mechanism), but may generally be done manually as well.

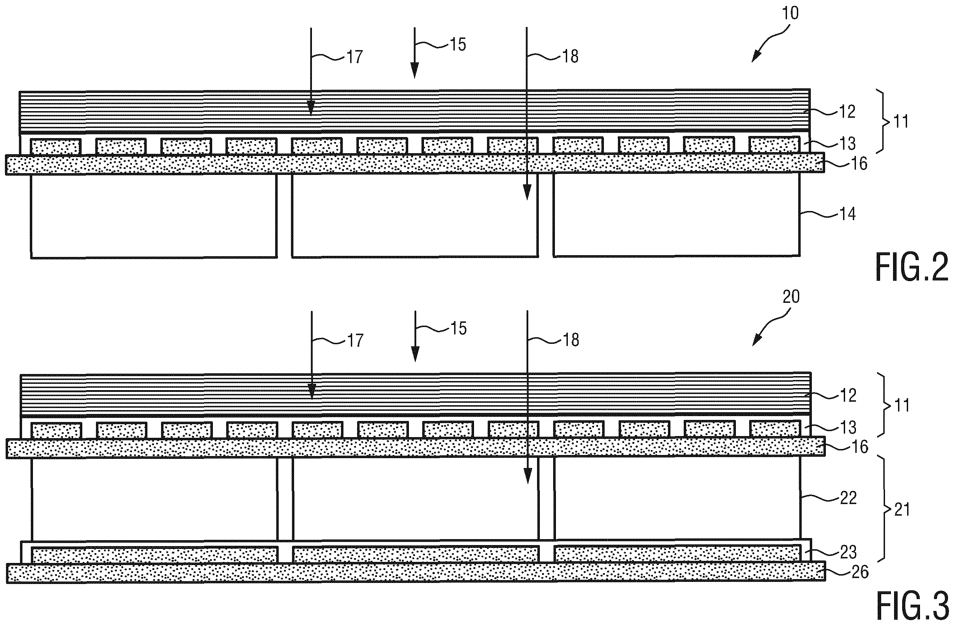

Fig. 2 shows a cross-sectional view of a first embodiment of a combined imaging detector 10 for detection of gamma and x-ray quanta according to the present invention. The combined imaging detector 10 may be used as detector 3 in an embodiment of the imaging system 1 shown in Fig. 1. It comprises an integrating x-ray detector 11 comprising a first scintillator layer 12 of x-ray scintillator elements configured to generate x-ray scintillation light signals in response to detected x-ray quanta and to generate first gamma scintillation light signals in response to detected gamma quanta. The integrating x-ray detector 11 further comprises a photodetector array 13 arranged between the first scintillator layer 11 and a second structured scintillator layer 14 of gamma scintillator elements configured to generate second gamma scintillation light signals in response to detected gamma quanta. The photodetector array 13 is configured to convert said x-ray scintillation light signals into x-ray signals and said first and second gamma scintillation light signals into first and second gamma signals. The first scintillator layer 12, the photodetector layer 13 and the second scintillator layer 14 are arranged in a stacked configuration along a radiation-receiving direction 15 along which x-ray radiation 17 and gamma radiation 18 is mainly incident on the imaging detector 10. Further, between the photodetector layer 13 and the second scintillator layer 14 a substrate layer 16 (e.g. a glass plate) is arranged carrying said layers. Further, a metal layer with transparent contacts, metal lines, thin film transistors, etc. may be provided between the photodetector layer 13 and the second scintillator layer 14 as needed in the respective implementation.

The first embodiment of the imaging detector 10, using a single shared photodetector layer 13 e.g. with pixelated photodiodes, may be implemented by using one x-ray detector 11 with transparent contacts and an additional pixelated CsI:Tl array representing the second structured scintillator layer 14 of at its backside, has the advantage of a full gamma signal, part of it (approximately 20-30% of Tc-99m radiation with energy 140 keV) due to absorption in the first scintillation layer 12, which may be implemented as thin CsI:Tl layer, and the rest (approximately 70-80%) from absorption in the thick structured CsI:Tl layer 14. Direct addition of both gamma signals, e.g. in a storage capacitor of each detector pixel, results in a full gamma signal and low noise.

Bremsstrahlung from a radiation element like e.g. from yttrium Y-90 (150-600 keV energy range), is mainly absorbed in the second scintillator layer 14. Low-energy (e.g. up to 81 keV) gamma radiation from another radiation element like e.g. holmium Ho-166 is mainly absorbed in the first high-resolution scintillator layer 12.

Fig. 3 shows a cross-sectional view of a second embodiment of a combined imaging detector 20 according to the present invention. The combined imaging detector 20 may be used as detector 3 in an embodiment of the imaging system 1 shown in Fig. 1. It comprises, substantially like the combined imaging detector 10, an integrating x-ray detector 11 comprising a first scintillator layer 12 of x-ray scintillator elements configured to generate x-ray scintillation light signals in response to detected x-ray quanta and a first photodetector array 13 configured to convert said x-ray scintillation light signals into x-ray signals. It comprises further an integrating gamma detector 21 comprising a second structured scintillator layer 22 of gamma scintillator elements configured to generate gamma scintillation light signals in response to detected gamma quanta and a second photodetector array 23 configured to convert said gamma scintillation light signals into gamma signals. The first scintillator layer 12, the first photodetector array 13, the second scintillator layer 22, and the second photodetector array 23 are arranged in a stacked configuration along the radiation-receiving direction 15. Further, between the first photodetector layer 13 and the second scintillator layer 14 a first substrate layer 16 is arranged carrying said layers, and below the second photodetector layer 23 a second substrate layer 26 is arranged carrying said layer.

The second embodiment of the imaging detector 20, using two separate photodetector layers 13, 23, may be implemented by a first thin scintillator layer 12 and a second thick scintillator layer 22. The imaging detector 20 has the advantage that most of the low-energy scatter is absorbed in the first detector 11 and a gamma signal with much lower scatter fraction is seen in the second detector 21.

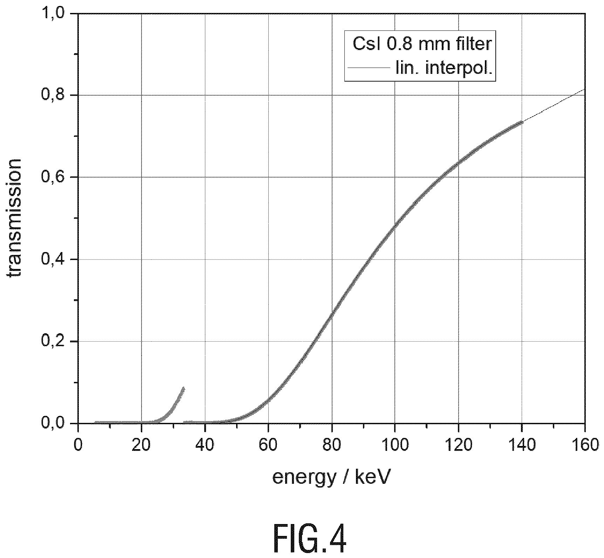

Fig. 4 shows a diagram illustrating the absorption of gamma quanta in an 800 µm CsI layer. It shows that nearly all scatter below 60 keV is absorbed in the 800 µm CsI layer while 70% of the photo peak signal, around 140 keV for technetium Tc-99m, are transmitted. The photo peak signal will be lower, but scatter correction will be easier if only the gamma signals from the second photodetector 23 are used for reconstruction of a gamma image. Alternatively, the ratio of gamma signals in the two photodetectors 13, 23 can be used as additional input for scatter correction in SPECT reconstruction.

The present invention thus combines two different imaging modalities:
- x-ray imaging with high spatial resolution needed for precise anatomical imaging; and
- gamma imaging with low spatial resolution, which is well adapted to the needs of low-dose functional imaging with low signal-to-noise ratio; large detector pixels may be used to obtain an adequate number of gamma photons for reasons of S/N ratio and image quality.

In the first embodiment (imaging detector 10), the high-resolution x-ray detector 11 is used for gamma imaging as well. The signal measured in a multitude of x-ray detector pixels (e.g. in the range of 148-154 µm size) is added up and binned into larger pixels for SPECT reconstruction (typically 1-5 mm, preferably 2-4 mm size). As an example, 20 x 20 square x-ray detector pixels of 154 µm size may be binned into a 3.08 x 3.08 mm² square pixel for SPECT imaging. For future high-resolution x-ray detectors with 100 µm pixel size, 30 x 30 detector pixels may e.g. be binned into a 3.0 x 3.0 mm SPECT detector pixel. The advantage of the first embodiment, compared to a dual-layer detector, is that all gamma quanta, not only 70-80%, are detected, resulting in better S/N ratio and image quality.

In the second embodiment (imaging detector 20), the first detector 11 is only used for high-resolution x-ray imaging and the second detector 21 is only used for low-resolution gamma imaging as described above. The advantage for gamma imaging is that a large part of scattered gamma quanta are absorbed in the first detector 11 so that scatter correction for the SPECT image is made easier.

From a detector manufacturing point of view, i.e. to keep detector BOM (bill of material) costs low, the same photodetector panel may be used for the first photodetector 13 (x-ray unit) and the second photodetector 23 (SPECT unit). A different sensor design for the second photodetector 23 might be costly, and with the binning of high-resolution pixels into larger pixels for SPECT imaging this is may be avoided. Preferably, the same 30 x 40 cm² photon detector panels should be used that will be used in a future dual-layer NEXIS (next generation x-ray imaging system) x-ray detector.

Conventionally, gamma quanta are normally detected in counting mode with high energy resolution to separate quanta with full energy from quanta with lower energy that have been scattered within the patient. These low-energy quanta would be detected at a position of the detector that does not correspond to the point of emission in the patient. A charge integrating x-ray or gamma detector cannot discriminate between full energy and lower energy quanta, therefore it may be needed to correct for scatter by software. The scatter correction will be applied on the gamma signal, stemming from the first and second scintillator layers 12, 22 in the first embodiment or from the second detector 21 in the second embodiment.

Such a scatter correction (optionally including attenuation correction and resolution recovery), as performed according to the present invention in the processing unit 9, is used in iterative SPECT reconstruction where it is applied to estimate the amount of scatter within the photo peak energy window. The algorithm does not use any subtraction of signals, which would result in increased noise, but approaches the true tracer distribution iteratively, which even allows resolution recovery and results in a strongly reduced noise level. As additional input the algorithm may use an attenuation map of the object. X-ray attenuation is directly obtained from cone beam reconstruction of x-ray projections. The measured x-ray attenuation is scaled down to obtain the gamma attenuation map for relevant gamma energies, e.g. 140 keV for Tc-99m. This is also used in SPECT/CT and PET/CT imaging.

A description of a Monte Carlo based algorithm for SPECT reconstruction is given in H. Botterweck, R. Bippus, A. Goedicke, A. Salomon, H. Wieczorek, Quantitative Simultaneous Multiple Isotope SPECT Imaging with Iterative Monte-Carlo Reconstruction, Proc. of the 9th Fully 3D Image Reconstruction Meeting, Lindau, 221-224 (2007). This paper shows that even dual-isotope imaging, i.e. the separation of two neighbouring emission peaks is made possible by such an algorithm. According to the present disclosure, there may be a larger amount of scatter than in standard SPECT, but it may only be needed to differentiate between photo peak counts and scatter at any lower energy. This classification is easier than a separation of peaks.

There are other algorithms available for scatter correction, e.g. algorithms developed for cone beam CT, that may be applied in a similar way for scatter correction in SPECT. An example paper is J. Wiegert, M. Bertram, G. Rose, T. Aach, Model based scatter correction for cone-beam computed tomography, Proc. Vol. 5745, Medical Imaging 2005: Physics of Medical Imaging.

According to further embodiments there may be a number of modifications, which may be applied separately or in combination.

In one embodiment, instead of CsI:Tl, other scintillator materials can be used for the SPECT detector 21 in the second imaging detector 20. Thus materials include, for instance, NaI:Tl, Gd₂O₂S:Tb, Y₂O₃:Eu, or (Lu,Gd)(Al,Ga):Ce garnets. Preferably, scintillators with high light output are used, but BGO (bismuth germanium oxide or bismuth germanate) may be used as well for Y-90 imaging because of its strong absorption of high-energy gamma quanta. There are no severe requirements for lag or afterglow.

In the first imaging detector 10 the scintillator materials of the two scintillator layers 12, 14 may preferably be identical since their signals are preferably added up.

The thickness of the structured scintillator layer 14 or 22 should be in the range 2-40 mm, preferably 5-10 mm, most preferred 6-10 mm.

The second scintillator layer 14, 22 may be configured as poly crystalline or ceramic scintillator layer. It may be transparent or light scattering.

In the first imaging detector 10, instead of a standard flat photodetector 13 with a-Si:H photodiodes, a direct converter (e.g. amorphous selenium, perovskites) may be used for x-ray detection. The photons generated within this scintillator layer 14 are then absorbed by the direct conversion layer. This detector arrangement could be used upside-down, with its glass substrate towards the incoming x-ray beam and with the thick structured scintillator layer 14 on top of the photodetector 13 for gamma detection. This also lowers the amount of lowest-energy scattered quanta.

In an embodiment fast frames are used for x-ray imaging (typically 40 ms) but long frames (up to tens of seconds) for gamma imaging. Two gamma quanta of 140 keV are equivalent in signal to the noise equivalent dose of an x-ray detector. Therefore a high number of quanta have to be absorbed and their charge signal integrated before readout to keep the noise level low.

In an embodiment a relatively coarse x-ray anti-scatter grid (ASG) and two ASGs on top of and perpendicular to each other may be used to help reducing the amount of scattered gamma quanta in SPECT imaging. Such ASGs may be used instead of a SPECT collimator. Further, scatter correction via software may be applied in this embodiment.

In another embodiment such ASGs may further be used as standard for x-ray imaging, and the collimator may be used in addition for SPECT imaging.

In another embodiment combinations of the first and second scintillator signals may be used for gamma reconstruction. For instance, their ratio may be used as mentioned above for scatter correction and their sum may be used for better SNR.

In an embodiment thin CsI:Tl layers may be used as scintillator layers. With higher x-ray energies, up to 120 keV instead of 70 keV, there is a limited percentage of x-ray radiation absorbed in the second scintillator layer 12, 22. This extra information can be used to increase the signal (sum of first and second signals) and the S/N ratio, to obtain spectral x-ray information and to increase image contrast.

In an embodiment scatter correction for planar gamma images may be applied instead of or in addition to reconstructed images. The above-mentioned method by Wiegert et al. may be used for scatter correction in this case.

The disclosed imaging system may be used to measure x-ray and gamma quanta in two separate rotations, a fast one for x-ray (cone beam CT) and a slow rotation for gamma tomography (SPECT). For the SPECT rotation a collimator may be arranged at the detector front side. The disclosed concept works with different isotopes, e.g. Tc-99m (e.g. used in a pre-scan) and Y-90 or Ho-166 (e.g. used for therapy). The detector(s) may be built as detectors on foil.

In selective Internal Radiation Therapy (SIRT) in-situ radiotracer monitoring is needed during intervention to improve the workflow. The disclosed double-function x-ray detector ensures low cost, small weight and small size detector. This provides several clinical values: a 1-stop-shop for cost reduction and efficiency (no patient transfer between IR and SPECT rooms, test and therapeutic injection in a single session), and improved patient outcome (immediate shunting control to other organs, 3D-dosimetry during intervention for improved tumor coverage by therapy agent, and other potential applications in surgical oncology, lymph node removal, lung tumor targeting).

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. Combined imaging detector (10) for detection of gamma and x-ray quanta, the combined imaging detector comprising:
- an integrating x-ray detector (11) comprising a first scintillator layer (12) of x-ray scintillator elements configured to generate x-ray scintillation light signals in response to detected x-ray quanta and to generate first gamma scintillation light signals in response to detected gamma quanta; and
- a second structured scintillator layer (14) of gamma scintillator elements configured to generate second gamma scintillation light signals in response to detected gamma quanta;
wherein the integrating x-ray detector (11) further comprises a photodetector array (13) arranged between the first scintillator layer (12) and the second scintillator layer (14) and configured to convert said x-ray scintillation light signals into x-ray signals and said first and second gamma scintillation light signals into first and second gamma signals, and
wherein the first scintillator layer (12), the photodetector layer (13) and the second scintillator layer (14) are arranged in a stacked configuration along a radiation-receiving direction (15).

2. Combined imaging detector as claimed in claim 1,
wherein electrical contacts and/or a substrate layer (16) arranged between the photodetector array (13) and the second scintillator layer (14) are transparent for gamma scintillation light signals.

3. Combined imaging detector as claimed in claim 1 or 2,
wherein the photodetector array (13) is configured to generate the first gamma signals by adding up a plurality of first gamma signals detected at a plurality of neighboring detector pixels into combined first gamma signals.

4. Combined imaging detector as claimed in any one of the preceding claims,
wherein the second scintillator layer (14) comprises an array of optically separated CsI:Tl crystals, structured CsI:Tl crystals, or a polycrystalline or ceramic layer.

5. Combined imaging detector (20) for detection of gamma and x-ray quanta, the combined imaging detector comprising:
- an integrating x-ray detector (11) comprising
- a first scintillator layer (12) of x-ray scintillator elements configured to generate x-ray scintillation light signals in response to detected x-ray quanta, and
- a first photodetector array (13) configured to convert said x-ray scintillation light signals into x-ray signals; and
- an integrating gamma detector (21) comprising
- a second structured scintillator layer (22) of gamma scintillator elements configured to generate gamma scintillation light signals in response to detected gamma quanta, and
- a second photodetector array (23) configured to convert said gamma scintillation light signals into gamma signals,
wherein the first scintillator layer (12), the first photodetector array (13), the second scintillator layer (22), and the second photodetector array (23) are arranged in a stacked configuration along a radiation-receiving direction (15).

6. Combined imaging detector as claimed in claim 5,
wherein the first photodetector array (13) is configured to absorb low-energy scattered gamma radiation.

7. Combined imaging detector as claimed in claim 5 or 6,
wherein the second scintillator layer (22) comprises an array of structured crystals of one of CsI:Tl, NaI:Tl, Gd2O2S:Tb, Y2O3:Eu, or (Lu,Gd)(Al,Ga):Ce or a polycrystalline or ceramic layer.

8. Combined imaging detector as claimed in any one of the preceding claims,
wherein the first scintillator layer (12) comprises a layer of columnar CsI:Tl crystals and/or
wherein the one or more photodetector arrays (13, 23) each comprises an array of Si:H photodiodes or a direct converter, in particular amorphous selenium or perovskites.

9. Combined imaging detector as claimed in any one of the preceding claims,
further comprising a removable collimator (100) configured to be automatically moved into and out of the radiation path, in particular by folding, shifting or rotation, so that it is within the radiation path during the detection of gamma quanta and out of the radiation path during the detection of x-ray quanta.

10. Combined imaging detector as claimed in any one of the preceding claims,
wherein the first scintillator layer (12) has a thickness in the range of 300 to 800 µm and/or the second scintillator layer (14, 22) has a thickness in the range of 2 to 40 mm, in particular in the range of 5 to 10 mm

11. Combined imaging detector as claimed in any one of the preceding claims, wherein the second scintillator layer (14, 22) is configured to generate additional x-ray scintillation light signals in response to detected x-ray quanta used to generate additional x-ray signals for increasing the total x-ray signals, increasing the S/N ratio, obtaining spectral information and/or increasing image contrast.

12. Imaging system (1) comprising:
- an x-ray source (2) for emitting pulsed x-ray radiation, and
- a combined imaging detector (3, 10, 20) for detection of gamma and x-ray quanta as claimed in any one of the preceding claims.

13. Imaging system as claimed in claim 12,
further comprising a control unit (8) configured to control the combined imaging detector to detect gamma quanta during intervals between x-ray pulses during which x-ray quanta are detected, in particular to control the combined imaging detector to detect gamma quanta during intervals that are longer than x-ray pulses.

14. Imaging system as claimed in any one of claims 12 or 13,
further comprising a scatter correction unit (9) configured to correct the gamma signals for scattered gamma radiation using an attenuation map of an imaging object, in particular using an attenuation map obtained from said x-ray signals by scaling down x-ray attenuation to energies of gamma radiation.

15. Imaging system as claimed in claim 12 or 13,
wherein the combined imaging detector is an imaging detector (20) as claimed in any one of claims 5 to 7,
wherein the first scintillator layer (12) is configured to generate additional gamma scintillation light signals in response to detected gamma quanta,
wherein the first photodetector array (13) is configured to convert said additional scintillation light signals into additional gamma signals, and
wherein the scatter correction unit (9) is configured to use the ratio of the additional gamma signals to the gamma signals as additional input for the scatter correction.
